# EUROPEAN PATENT SPECIFICATION

(11) **EP 3 539 847 B1**
(45) Date of publication and mention of the grant of the patent: **21.07.2021**
(21) Application number: 19163019.3
(22) Date of filing: 15.03.2019
(51) Int. Cl.: B62D 1/181, B62D 1/19

(54) **STEERING COLUMN DEVICE**
LENKSÄULENVORRICHTUNG
DISPOSITIF DE COLONNE DE DIRECTION

(30) Priority: 16.03.2018 JP 2018049287
(43) Date of publication of application: 18.09.2019
(73) Proprietor: Fuji Kiko Co., Ltd., Shizuoka 431-0431 (JP)
(72) Inventor: MATSUNO, Mitsuyoshi, Kosai-shi, Shizuoka 431-0431 (JP); ITOU, Tadao, Kosai-shi, Shizuoka 431-0431 (JP); KIJIMA, Shogo, Kosai-shi, Shizuoka 431-0431 (JP)
(74) Representative: Grünecker Patent- und Rechtsanwälte PartG mbB

(56) References cited:
- EP-A1- 3 095 671
- US-A1- 2015 232 117

## Description

### Technical Field

The present invention relates to a steering column device that enables telescopic operation and in which, in secondary collision during collision, an inner column moves together with a steering shaft with an impact load and absorbs the impact load.

### Background Art

In an electric steering column device, a screw shaft is coupled to an electric motor provided in an outer column and a nut is screwed to the screw shaft (Patent Literature 1: Japanese Patent Application Publication No. 2008-24243). A sleeve engaging with a normal-time engaging section of a long hole of an inner column is moved by movement of the nut, which is caused by rotation of the screw shaft, whereby the inner column moves with respect to the outer column. During impact absorption in second collision, the sleeve climbs over a projecting section from the normal-time engaging section of the long hole and thereafter moves in an impact-load-input-time engaging section while receiving frictional resistance to absorb collision energy. US2015/232117A shows the preamble of the independent claim.

### Summary

In this case, during the collision energy absorption, the sleeve moves while expanding the impact-load-input-time engaging section, the width of which is reduced to be narrower than the diameter of the normal-time engaging section. Therefore, sliding frictional resistance during the movement tends to be large. In order to set the sliding frictional resistance to proper resistance, it is necessary to highly accurately set a dimensional relation between the sleeve and the impact-load-input-time engaging section, leading to an increase in machining cost.

Therefore, an object of the present invention is to set the sliding frictional resistance during the collision energy absorption to proper resistance while reducing the machining cost.

The present invention provides a steering column device including: an outer column configured to be attached to a vehicle body; an inner column provided to be movable in a vehicle body front-rear direction with respect to the outer column and configured to rotatably support a steering shaft; an electric actuator provided in one of the outer column and the inner column and configured to move the inner column in the vehicle body front-rear direction; and a driving member configured to transmit a driving force of the electric actuator to another of the outer column and the inner column. The driving member includes a first protrusion and a second protrusion provided at an interval from each other along a moving direction of the inner column with respect to the outer column. The other of the outer column and the inner column includes an engaging hole into which the first protrusion is inserted and a long hole elongated along the moving direction of the inner column, the second protrusion being inserted into the long hole. The first protrusion is pressed against the engaging hole and sheared when the inner column receives an impact load toward a vehicle body forward direction. The second protrusion relatively moves in the long hole while being elastically deformed and receiving sliding frictional resistance toward the vehicle body front-rear direction when the inner column receives the impact load toward the vehicle body forward direction.

According to the present invention, the driving member and a side that receives the driving force of the driving member are uncoupled by the shearing of the first protrusion. The second protrusion absorbs the impact load by being elastically deformed and moving while receiving the sliding frictional resistance. In this case, the first protrusion and the second protrusion separately perform the uncoupling and the impact absorption. It is possible to easily set an energy absorption load during collision. It is possible to prevent an increase in machining cost due to highly accurately setting of a dimensional relation.

### Brief Description of Drawings

Fig. 1 is a perspective view showing a steering column device according to an embodiment of the present invention.
Fig. 2 is a right side view of the steering column device shown in Fig. 1.
Fig. 3A is an exploded perspective view of a driving member and a screw shaft applied to the steering column device shown in Fig. 1.
Fig. 3B is an exploded perspective view of the driving member and the screw shaft viewed from an angle different from an angle in Fig. 3A.
Fig. 4 is a right side view in which the driving member and the screw shaft shown in Fig. 2 are omitted.
Fig. 5 is a side view showing a positional relation in a front-rear direction between an engaging hole and a long hole of an inner column and a first protrusion and a second protrusion of the driving member while associating the engaging hole and the long hole and the first protrusion and the second protrusion each other.
Fig. 6 is a B-B sectional view of Fig. 2.
Fig. 7A is an operation explanatory diagram showing a positional relation in the front-rear direction between the engaging hole and the long hole of the inner column and the first protrusion and the second protrusion of the driving member at normal time.
Fig. 7B is an operation explanatory diagram showing a state in which the inner column receives an impact load and moves forward from a state shown in Fig. 7A and the first protrusion starts to be sheared.
Fig. 7C is an operation explanatory diagram showing a state in which the inner column moves further forward from the state shown in Fig. 7B and shearing fracture of the first protrusion is substantially completed.
Fig. 7D is an operation explanatory diagram showing a state in which the inner column moves further forward from the state shown in Fig. 7C and the second protrusion relatively moves in the long hole while being elastically deformed.

### Description of Embodiments

An embodiment of the present invention is explained below with reference to the drawings.

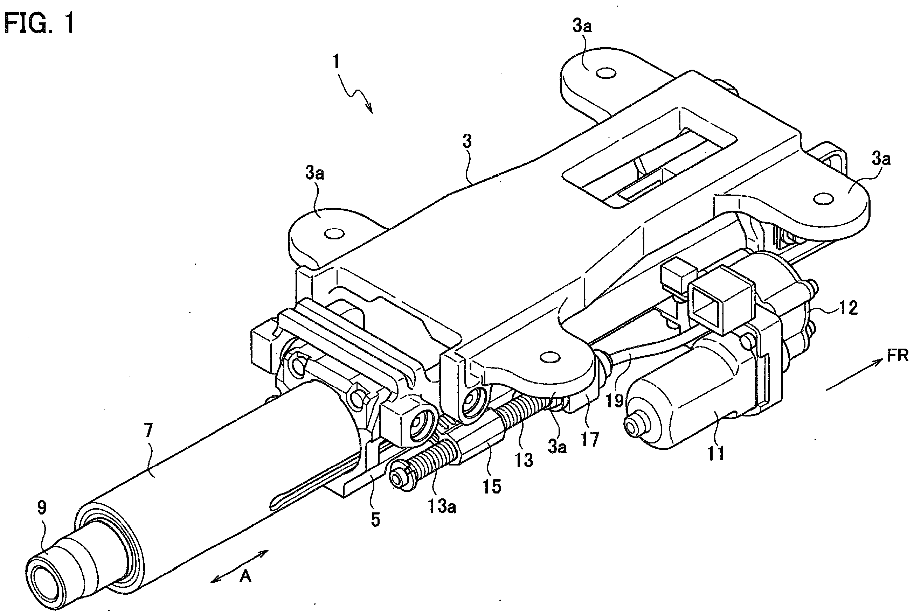

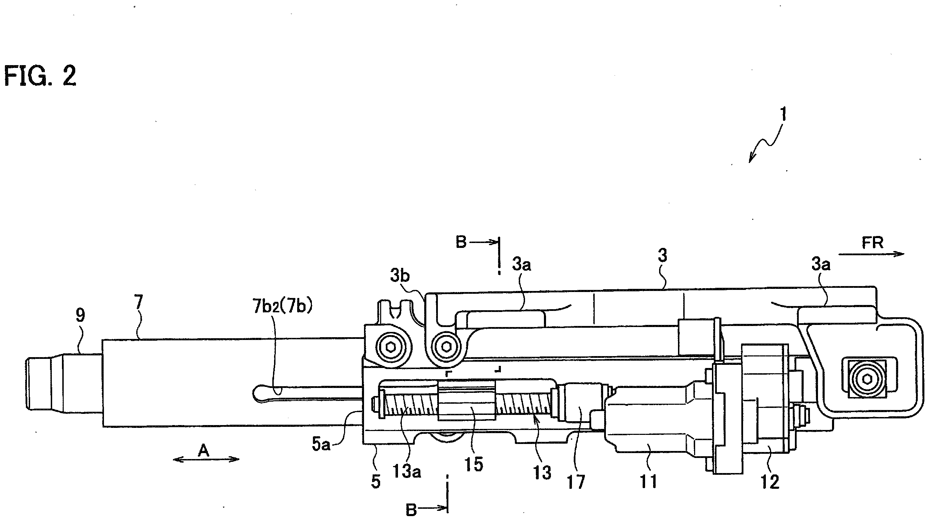

Figs. 1 and 2 show a steering column device 1 according to the embodiment of the present invention. A direction indicated by an arrow FR in Fig. 1 in a state in which the steering column device 1 is attached to a vehicle body is a vehicle body forward direction. In the following explanation, "forward direction" indicates the vehicle body forward direction, "rearward direction" indicates a vehicle body rearward direction, and "left-right direction" indicates a left-right direction in a state in which the forward direction is viewed from the vehicle body rearward direction.

The steering column device 1 includes a vehicle body attachment bracket 3 attached to a not-shown vehicle body, an outer column 5 supported swingably in the up-down direction with respect to the vehicle body attachment bracket 3, and an inner column 7 movable in the vehicle body front-rear direction with respect to the outer column 5. The vehicle body attachment bracket 3 includes attachment sections 3a in a plurality of parts and is attached to the vehicle body via the attachment sections 3a. As shown in Fig. 2, a rear end 5a of the outer column 5 is located slightly in the rearward direction than a rear end 3b of the vehicle body attachment bracket 3. The inner column 7 projects rearward from the rear end 5a of the outer column 5.

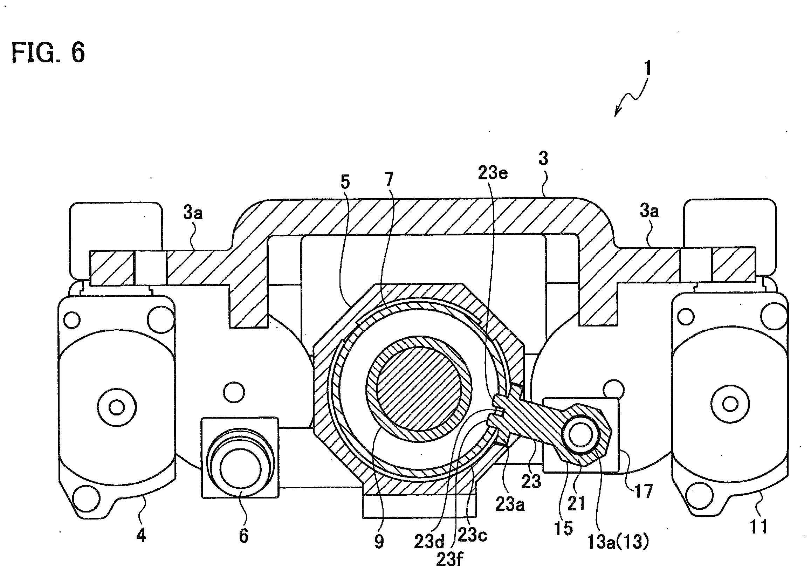

The outer column 5 swings in the up-down direction with respect to the vehicle body attachment bracket 3 via a motor 4 for tilt driving (see Fig. 6) and a ball screw mechanism 6, a not-shown link mechanism, and the like operated by the motor 4. The motor 4, the link mechanism, and the like are provided on a left side portion of the steering column device 1. When the outer column 5 swings in the up-down direction, the inner column 7 and a steering shaft 9 rotatably inserted into the inner column 7 also integrally swing. A not-shown steering wheel is attached to an end portion on a rear side of the steering shaft 9.

Therefore, the steering column device 1 includes an electric tilt mechanism configured to allow the steering wheel to swing in the up-down direction. The steering column device 1 further includes an electric telescopic mechanism configured to allow the steering wheel to move in the front-rear direction. The electric telescopic mechanism is explained below.

The electric telescopic mechanism includes a motor for telescopic driving (hereinafter simply referred to as "motor") 11 functioning as an electric actuator attached to a right side portion of the outer column 5. The motor 11 is attached to the outer column 5 together with a speed reducer unit 12. A screw shaft 13 driven to rotate by the motor 11 is extended along the axial direction of the inner column 7 having a cylindrical shape.

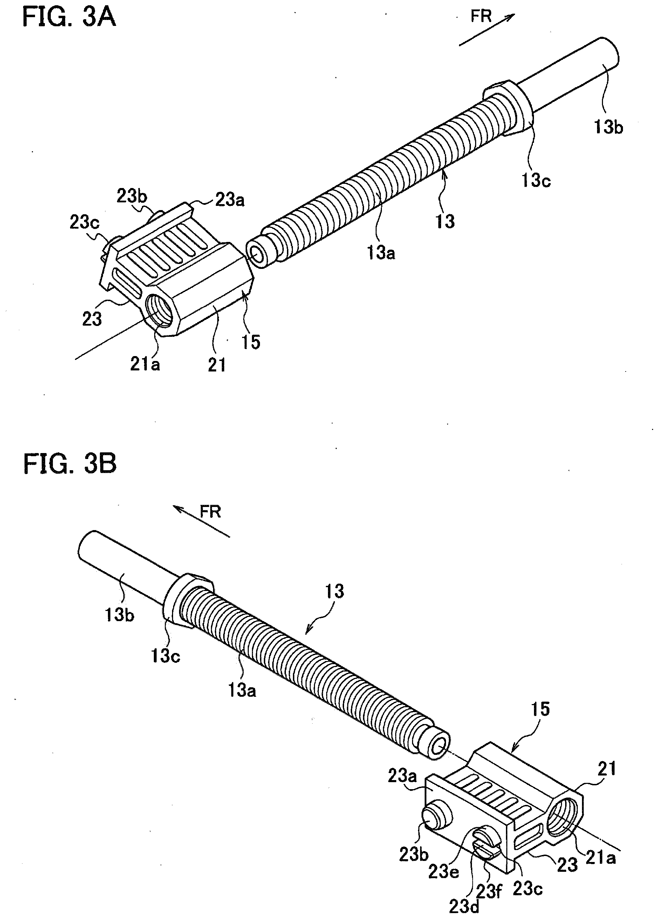

As shown in Figs. 3A and 3B as well, the screw shaft 13 includes a male screw section 13a with which a driving member 15 screws, a shaft section 13b located in the forward direction with respect to the male screw section 13a, and a flange section 13c located between the male screw section 13a and the shaft section 13b. The shaft section 13b of the screw shaft 13 is supported by the outer column 5 via a support section 17. The shaft section 13b is rotatable with respect to the support section 17 in a state in which movement in the axial direction is restricted with respect to the support section 17. Power transmission from the speed reducer unit 12 to the screw shaft 13 is performed by a flexible shaft 19. Depending on attachment positions or shapes of the motor 11 and the speed reducer unit 12, it is also possible to directly couple the shaft section 13b to the speed reducer unit 12 without using the flexible shaft 19.

The driving member 15 is integrally molded by, for example, resin having a Young's modulus lower than a Young's modulus of a material forming the inner column 7. The driving member 15 includes a nut section 21 configured to be screwed to the male screw section 13a and a protrusion forming section 23 formed to project from one side portion of the nut section 21 toward the outer column 5. The nut section 21 has a substantially cylindrical shape. A female screw 21a is formed on the cylinder inner surface of the nut section 21.

The protrusion forming section 23 includes an end plate section 23a at the end portion on the opposite side of the nut section 21. The end plate section 23a has a rectangular shape elongated in the front-rear direction when viewed from the left-right direction. A first protrusion 23b and a second protrusion 23c projecting toward the inner column 7 are formed on the end face of the end plate section 23a on the opposite side of the nut section 21. The first protrusion 23b and the second protrusion 23c are provided at an interval from each other along a moving direction A of the inner column 7 with respect to the outer column 5. The first protrusion 23b is located further in the forward direction than the second protrusion 23c.

The first protrusion 23b has a substantially columnar shape. The second protrusion 23c has a columnar shape as a whole. However, a groove 23d functioning as a cut-off section is formed along the moving direction A. The second protrusion 23c is divided into an upper section 23e and a lower section 23f with the groove 23d located therebetween.

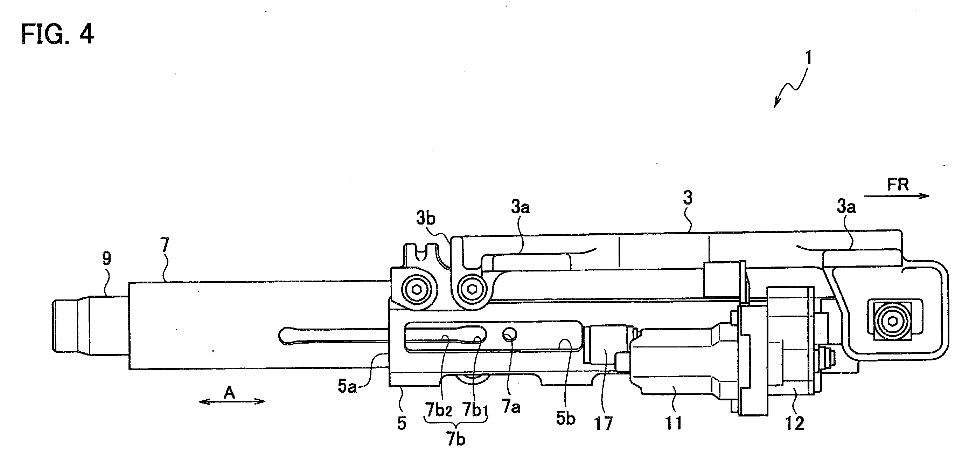

In Fig. 4, the screw shaft 13 and the driving member 15 shown in Fig. 2 are omitted. As shown in Fig. 4, an opening section 5b is formed on a right side portion of the outer column 5 in a position corresponding to the screw shaft 13. The opening section 5b pierces through the right side portion of the outer column 5 and is formed long along the moving direction A.

In the right side portion of the inner column 7, an engaging hole 7a into which the first protrusion 23b is inserted and a long hole 7b into which the second protrusion 23c is inserted are formed to correspond to the opening section 5b. The engaging hole 7a is located further in the forward direction than the long hole 7b. The engaging hole 7a has a circular shape to correspond to the first protrusion 23b having the columnar shape. The first protrusion 23b is pressed into and fixed in the engaging hole 7a. Consequently, the driving member 15 and the inner column 7 are coupled. The long hole 7b is formed long along the moving direction A.

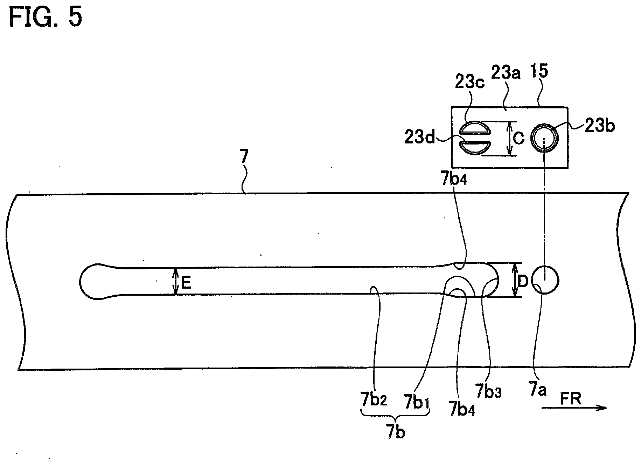

As shown in Fig. 5 as well, the long hole 7b includes an expanded section 7b1 located at the end portion on the engaging hole 7a side and a sliding resistance section 7b2 formed continuously to the opposite side of the engaging hole 7a with respect to the expanded section 7b1. The expanded section 7b1 is formed longer along the moving direction A than a diameter C of the second protrusion 23c.

In a state in which the first protrusion 23b is pressed into the engaging hole 7a, the second protrusion 23c is present in a position near an end edge portion 7b3 on the engaging hole 7a side of the expanded section 7b1. The end edge portion 7b3 of the expanded section 7b1 is formed in an arcuate shape. Width D in the up-down direction of the expanded section 7b1 is slightly larger than or substantially equal to the diameter C of the second protrusion 23c (D≥C). Therefore, the second protrusion 23c can relatively move without receiving large sliding frictional resistance along the moving direction A with respect to the expanded section 7b1.

The sliding resistance section 7b2 is sufficiently longer along the moving direction A than the expanded section 7b1. Width E in the up-down direction of the sliding resistance section 7b2 is slightly smaller than the diameter C of the second protrusion 23c (E<C). In the expanded section 7b1, a continuous section 7b4 formed continuously to the sliding resistance section 7b2 is formed as an inclined surface or formed in a concave arcuate shape.

In Fig. 4, the engaging hole 7a is located substantially in the center in the front-rear direction (in Fig. 4, the left-right direction) of the opening section 5b. It is possible to adjust a front-rear direction position of the steering wheel by moving the inner column 7 back and forth with respect to the outer column 5 from this position. In a state shown in Fig. 4, the long hole 7b is extended in the forward direction and the backward direction centering on the rear end 5a of the outer column 5. Namely, in the state shown in Fig. 4, substantially half on the front side of the long hole 7b faces the opening section 5b and substantially half on the rear side of the long hole 7b is located on the outside of the outer column 5.

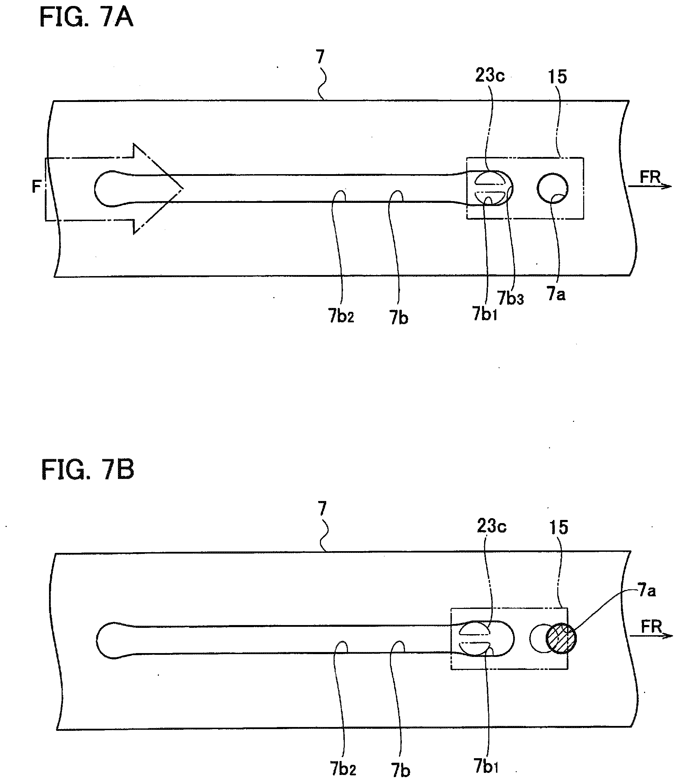

In a state in which the first protrusion 23b is pressed into and fixed in the engaging hole 7a, the second protrusion 23c is present in a position near the end edge portion 7b3 of the expanded section 7b1 as shown in Fig. 7A. When the motor 11 is driven to rotate the screw shaft 13 in this state, the screw shaft 13 rotates with respect to the nut section 21 of the driving member 15. Consequently, the driving member 15 moves in the front-rear direction along the screw shaft 13. According to the movement of the driving member 15, the inner column 7 moves in the front-rear direction. The front-rear direction position of the steering wheel is adjusted. At this time, a driving force of the driving member 15 is transmitted from the first protrusion 23b to the engaging hole 7a, and then the inner column 7 moves.

When a vehicle collides in the front-rear direction and the inner column 7 receives an impact load F as shown in Fig. 7B via the steering shaft 9 toward the forward direction, the impact load F acts between the first protrusion 23b and the engaging hole 7a. The driving member 15 including the first protrusion 23b is made of resin, and shearing stress of the driving member 15 is set lower than shearing stress of the inner column 7 made of metal. Therefore, the first protrusion 23b is sheared and fractured by the edge portion of the engaging hole 7a. The driving member 15 including the first protrusion 23b and the inner column 7 including the engaging hole 7a are uncoupled. At this time, forward movement of the driving member 15 is prevented because the driving member 15 is screwed to the screw shaft 13.

When the first protrusion 23b is sheared and fractured, the inner column 7 moves forward with respect to the outer column 5. At this time, the second protrusion 23c present in a position shown in Fig. 7A relatively moves rearward in the expanded section 7b1 of the long hole 7b as shown in Fig. 7B. When the second protrusion 23c relatively moves rearward in the expanded section 7b1, the sharing fracture of the first protrusion 23b is almost completed. Therefore, a rearward relative movement amount of the second protrusion 23c in the expanded section 7b1 is substantially equal to the diameter of the first protrusion 23b. The driving member 15 including the first protrusion 23b is made of resin, and the Young's modulus of the driving member 15 is set lower than the Young's modulus of the inner column 7 made of metal. Therefore, it is easy to control a load.

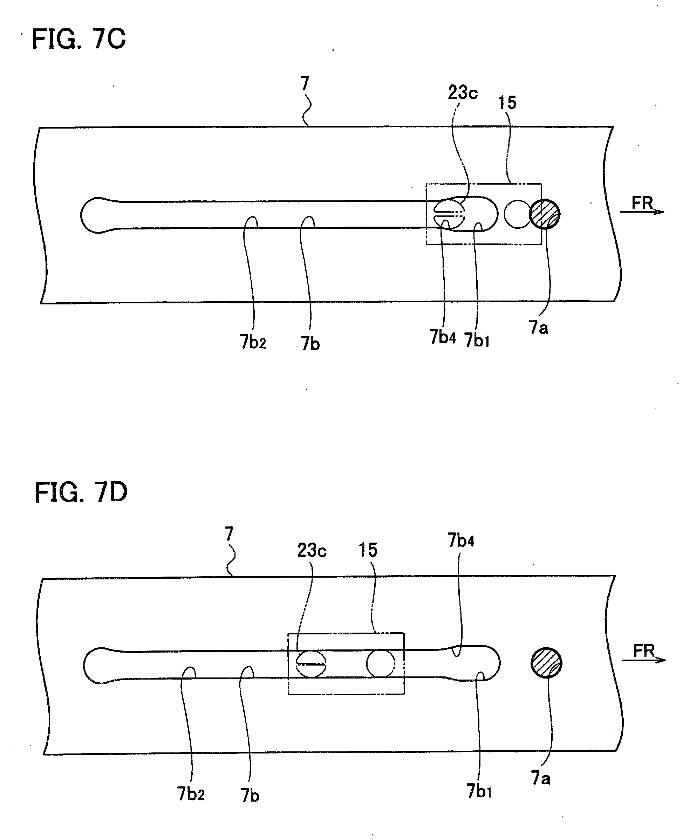

While the shearing fracture of the first protrusion 23b is almost completed, the second protrusion 23c enters the sliding resistance section 7b2 through the continuous section 7b4 and relatively moves further rearward as shown in Figs. 7C and 7D. When relatively moving in the sliding resistance section 7b2, the second protrusion 23c is pressed from upper and lower both side edges of the sliding resistance section 7b2 and is elastically deformed such that an upper section 23e and a lower section 23f approach each other. Therefore, when the inner column 7 moves forward with respect to the outer column 5, sliding frictional resistance is generated between the second protrusion 23c and the sliding resistance section 7b2 to absorb an impact load.

Operational effects are explained.

The steering column device 1 in this embodiment includes the outer column 5 attached to the vehicle body, the inner column 7 provided to be movable in the vehicle body front-rear direction with respect to the outer column 5 and configured to rotatably support the steering shaft 9, the motor 11 provided in the outer column 5 and configured to move the inner column 7 in the vehicle body front-rear direction, and the driving member 15 configured to transmit a driving force of the motor 11 to the inner column 7. The driving member 15 is formed of a material having a Young's modulus lower than a Young's modulus of a material forming the inner column 7 and includes the first protrusion 23b and the second protrusion 23c provided at an interval from each other along the moving direction of the inner column 7 with respect to the outer column 5. The inner column 7 includes the engaging hole 7a into which the first protrusion 23b is inserted and the long hole 7b into which the second protrusion 23c is inserted, the long hole 7b being elongated along the moving direction A of the inner column 7.

When the inner column 7 receives an impact load toward the vehicle body forward direction, the first protrusion 23b is pressed against the engaging hole 7a and sheared. When the inner column 7 receives an impact load toward the vehicle body forward direction, the second protrusion 23c relatively moves in the sliding resistance section 7b2 of the long hole 7b while being elastically deformed and receiving sliding frictional resistance toward the vehicle body rearward direction.

In this case, the first protrusion 23b is shared and fractured, whereby the driving member 15 and the inner column 7 are uncoupled. Thereafter, the second protrusion 23c absorbs an impact load by moving relative to the sliding resistance section 7b while being elastically deformed and receiving sliding frictional resistance. Therefore, the uncoupling of the driving member 15 and the inner column 7 and the impact absorption are separately performed by the first protrusion 23b and the second protrusion 23c. It is possible to easily set an energy absorption load during collision. It is possible to prevent an increase in machining cost due to highly accurate setting of a dimensional relation.

The driving member 15 including the first protrusion 23b and the second protrusion 23c is formed of resin. Therefore, compared with when the driving member 15 is formed of metal, it is possible to relatively easily set dimension accuracy during molding. It is also possible to contribute to a cost reduction.

In this embodiment, the second protrusion 23c includes the groove 23d functioning as the cut-off section. Therefore, when the second protrusion 23c moves relative to the long hole 7b while receiving sliding frictional resistance, the second protrusion 23c is easily elastically deformed. It is possible to stably perform impact absorption.

In this embodiment, the cut-off section is formed of the groove 23d extending along the longitudinal direction of the long hole 7b. In this case, in the second protrusion 23c, the upper section 23e and the lower section 23f on both sides of the groove 23d are pushed by the side edge of the sliding resistance section 7b2 and easily elastically deformed. It is possible to more stably perform the impact absorption.

In this embodiment, the material forming the inner column 7 is metal and the material forming the driving member 15 is resin. Therefore, the first protrusion 23b is easily sheared and fractured by the edge portion of the engaging hole 7a. It is possible to easily uncouple the outer column 5 on the driving member 15 side and the inner column 7 on the engaging hole 7a side. Since dimension accuracy of metals is not necessary and the driving member 15 can be easily molded by resin, manufacturing is easy and machining cost can be reduced.

The embodiment of the present invention is explained above. However, the embodiment is only an illustration described to facilitate understanding of the present invention as defined in the appended claims.

For example, in the embodiment, the motor 11, the screw shaft 13, the driving member 15, and the like on the driving side is provided in the outer column 5. However, the motor 11 and the like on the driving side may be provided in the inner column 7. In this case, the engaging hole and the long hole on the driven side are provided in the outer column 5. When the motor 11 and the like on the driving side are provided in the inner column 7, in Fig. 5, the first protrusion 23b is located behind the second protrusion 23c. Accordingly, the engaging hole 7a is located behind the long hole 7b. Namely, in Fig. 5, the left and the right are reversed while the right side is kept in the forward direction.

The driving member 15 is not limited to the driving member 15 integrally molded by resin. The driving member 15 only has to be formed of a material having a Young's modulus and rigidity lower than the Young's modulus and the rigidity of the material forming the inner column 7.

The groove 23d is provided in the second protrusion 23c. However, instead of the groove 23d, for example, one or a plurality of recessed sections or holes may be provided on the distal end face of the second protrusion 23c. A through-hole piercing through the second protrusion 23c in the same direction as the extending direction of the groove 23d may be provided. The first protrusion 23b and the second protrusion 23c is not limited to the columnar shape and may be a polygonal prism shape such as a quadrangular prism shape.

The steering column device 1 in this embodiment includes the electric tilt mechanism configured to allow the steering wheel to swing in the up-down direction. However, the steering column device 1 does not have to include the electric tilt mechanism.

## Claims

1. A steering column device (1) comprising:
an outer column (5) configured to be attached to a vehicle body;
an inner column (7) provided to be movable in a vehicle body front-rear direction with respect to the outer column (5) and configured to rotatably support a steering shaft (9);
an electric actuator provided in one of the outer column (5) and the inner column (7) and configured to move the inner column (7) in the vehicle body front-rear direction; and
a driving member (15) configured to transmit a driving force of the electric actuator to another of the outer column (5) and the inner column (7), wherein
the driving member (15) includes a first protrusion (23b) and a second protrusion (23c) provided at an interval from each other along a moving direction of the inner column (7) with respect to the outer column (5),
the other of the outer column (5) and the inner column (7) includes an engaging hole (7a) into which the first protrusion (23b) is inserted and fixed, and a long hole (7b) elongated along the moving direction of the inner column (7), and
**characterized In that**
the long hole (7b) includes an expanded section (7b1) located at an end portion on the engaging hole (7a) side, the second protrusion (23c) being inserted into the expanded section (7b1), and a sliding resistance section (7b2) formed continuously to an opposite side of the engaging hole (7a) with respect to the expanded section (7b1),
a width (D) in an orthogonal direction orthogonal to the moving direction of the expanded section (7b1) is larger than or equal to a width in the orthogonal direction of the second protrusion (23c), and a width (E) in the orthogonal direction of the sliding resistance section (7b2) is smaller than the width in the orthogonal direction of the second protrusion (23c), and
the first protrusion (23b) is pressed against the engaging hole (7a) and sheared when the inner column (7) receives an impact load toward a vehicle body forward direction, and the second protrusion (23c) enters from the expanded section (7b1) of the long hole (7b) to the sliding resistance section (7b2), and relatively moves in the sliding resistance section (7b2) of the long hole (7b) while being elastically deformed and receiving sliding frictional resistance toward the vehicle body front-rear direction when the inner column (7) receives the impact load toward the vehicle body forward direction.

2. The steering column device (1) according to claim 1, wherein the second protrusion (23c) includes a cut-off section.

3. The steering column device (1) according to claim 2, wherein the cut-off section is formed of a groove (23d) extending along a longitudinal direction of the long hole (7b).

4. The steering column device (1) according to any one of claims 1 to 3, wherein a material forming the other of the outer column (5) and the inner column (7) is metal and a material forming the driving member (15) is resin.

## Patentansprüche

1. Lenksäulenvorrichtung (1), umfassend:
eine äußere Säule (5), die konfiguriert ist, um an einem Fahrzeugkörper angebracht zu werden;
eine innere Säule (7), die bereitgestellt ist, um bezüglich der äußeren Säule (5) in einer Fahrzeugkörper-vorne-hinten-Richtung bewegbar zu sein und konfiguriert ist, eine Lenkwelle (9) drehbar zu lagern;
einen elektrischen Aktor, der in einer von der äußeren Säule (5) und der inneren Säule (7) bereitgestellt ist und konfiguriert ist, um die innere Säule (7) in der Fahrzeugkörper-vorne-hinten-Richtung zu bewegen; und
ein Antriebselement (15), das konfiguriert ist, um eine Antriebskraft des elektrischen Aktors zu einer anderen von der äußeren Säule (5) und der inneren Säule (7) zu übertragen, wobei
das Antriebselement (15) einen ersten Vorsprung (23b) und einen zweiten Vorsprung (23c) umfasst, die mit einem Abstand voneinander entlang einer Bewegungsrichtung der inneren Säule (7) bezüglich der äußeren Säule (5) bereitgestellt sind,
wobei die andere von der äußeren Säule (5) und der inneren Säule (7) ein Eingriffsloch (7a) umfasst, in welchem der erste Vorsprung (23 b) eingesetzt und befestigt ist, und ein Langloch (7b), das sich entlang der Bewegungsrichtung der inneren Säule (7) erstreckt, und
**dadurch gekennzeichnet, dass**
das Langloch (7b) einen erweiterten Abschnitt (7b1), der an einem Endteil auf der Seite des Eingriffslochs (7a) angeordnet ist, wobei der zweite Vorsprung (23c) in den erweiterten Abschnitt (7b1) eingesetzt ist, und einen Gleitwiderstandsabschnitt (7b2) umfasst, der zu einer entgegengesetzten Seite des Eingriffslochs (7a) bezüglich des erweiterten Abschnitts (7b1) kontinuierlich ausgebildet ist,
eine Breite (D) in einer senkrechten Richtung senkrecht zu der Bewegungsrichtung des erweiterten Abschnitts (7b1) größer ist als oder gleich wie eine Breite in der senkrechten Richtung des zweiten Vorsprungs (23c), und eine Breite (E) in der senkrechten Richtung des Gleitwiderstandsabschnitts (7b2) kleiner ist als die Breite in der senkrechten Richtung des zweiten Vorsprungs (23c), und
der erste Vorsprung (23b) gegen das Eingriffsloch (7a) gedrückt wird und abgeschert wird, wenn die innere Säule (7) eine Stoßlast in Richtung einer Fahrzeugkörper-Vorwärtsrichtung erhält, und der zweite Vorsprung (23c) aus dem erweiterten Abschnitt (7b1) des Langlochs (7b) in den Gleitwiderstandsabschnitt (7b2) eintritt, und sich in dem Gleitwiderstandsabschnitt (7 b 2) des Langlochs (7b) relativ bewegt, während er elastisch verformt wird und einen Gleitreibungswiderstand in Richtung der Fahrzeugkörper-vorne-hinten-Richtung erfährt, wenn die innere Säule (7) die Stoßlast in Richtung der Fahrzeugkörper-Vorwärts Richtung erhält.

2. Die Lenksäulenvorrichtung (1) nach Anspruch 1, wobei der zweite Vorsprung (23c) einen Trennabschnitt umfasst.

3. Die Lenksäulenvorrichtung (1) nach Anspruch 2, wobei der Trennabschnitt aus einer Nut (23d) gebildet ist, die sich entlang einer Längsrichtung des Langlochs (7b) erstreckt.

4. Die Lenksäulenvorrichtung (1) nach einem der Ansprüche 1 bis 3, wobei ein Material, welches die andere von der äußeren Säule (5) und der inneren Säule (7) bildet, Metall ist und ein Material, welches das Antriebselement (15) bildet, Harz ist.

## Revendications

1. Dispositif de colonne de direction (1) comprenant :
une colonne extérieure (5) configurée pour être attachée à une carrosserie de véhicule ;
une colonne intérieure (7) prévue pour être mobile dans une direction avant-arrière de carrosserie de véhicule par rapport à la colonne extérieure (5) et configurée pour supporter en rotation un arbre de direction (9) ;
un actionneur électrique prévu dans l'une de la colonne extérieure (5) et de la colonne intérieure (7) et configuré pour déplacer la colonne intérieure (7) dans la direction avant-arrière de carrosserie de véhicule ; et
un élément d'entraînement (15) configuré pour transmettre une force d'entraînement de l'actionneur électrique à une autre de la colonne extérieure (5) et de la colonne intérieure (7), dans lequel
l'élément d'entraînement (15) comporte une première saillie (23b) et une deuxième saillie (23c) prévues à un intervalle l'une de l'autre le long d'une direction de déplacement de la colonne intérieure (7) par rapport à la colonne extérieure (5),
l'autre de la colonne extérieure (5) et de la colonne intérieure (7) comporte un trou d'engagement (7a) dans lequel la première saillie (23b) est insérée et fixée, et un long trou (7b) allongé le long de la direction de déplacement de la colonne intérieure (7), et
**caractérisé en ce que**
le long trou (7b) comporte une section élargie (7b1) située au niveau d'une partie d'extrémité du côté du trou d'engagement (7a), la deuxième saillie (23c) étant insérée dans la section élargie (7b1), et une section de résistance au glissement (7b2) formée en continu sur un côté opposé du trou d'engagement (7a) par rapport à la section élargie (7b1),
une largeur (D) dans une direction orthogonale qui est orthogonale à la direction de déplacement de la section élargie (7b1) est supérieure ou égale à une largeur dans la direction orthogonale de la deuxième saillie (23c), et une largeur (E) dans la direction orthogonale de la section de résistance au glissement (7b2) est inférieure à la largeur dans la direction orthogonale de la deuxième saillie (23c), et
la première saillie (23b) est pressée contre le trou d'engagement (7a) et cisaillée lorsque la colonne intérieure (7) reçoit une charge d'impact vers une direction avant de carrosserie de véhicule, et la deuxième saillie (23c) pénètre depuis la section élargie (7b1) du long trou (7b) dans la section de résistance au glissement (7b2), et se déplace relativement dans la section de résistance au glissement (7b2) du long trou (7b) tout en étant déformée élastiquement et en recevant une résistance par friction au glissement vers la direction avant-arrière de carrosserie de véhicule lorsque la colonne intérieure (7) reçoit la charge d'impact vers la direction avant de carrosserie de véhicule.

2. Dispositif de colonne de direction (1) selon la revendication 1, dans lequel la deuxième saillie (23c) comporte une section découpée.

3. Dispositif de colonne de direction (1) selon la revendication 2, dans lequel la section découpée est formée d'une rainure (23d) s'étendant le long d'une direction longitudinale du long trou (7b).

4. Dispositif de colonne de direction (1) selon l'une quelconque des revendications 1 à 3, dans lequel un matériau formant l'autre de la colonne extérieure (5) et de la colonne intérieure (7) est un métal et un matériau formant l'élément d'entraînement (15) est une résine.
